# EUROPÄISCHE PATENTSCHRIFT

(11) **EP 2 470 713 B1**
(45) Veröffentlichungstag und Bekanntmachung des Hinweises auf die Patenterteilung: **24.06.2015**
(21) Anmeldenummer: 10743130.6
(22) Anmeldetag: 16.08.2010
(51) Int. Cl.: D06F 58/24

(54) **VERFAHREN ZUM BETREIBEN EINES ADSORPTIONS-TROCKNERS UND TROCKNER ZUR REALISIERUNG DES VERFAHRENS**
METHOD FOR OPERATING AN ADSORPTION DRYER AND DRYER FOR IMPLEMENTING THE METHOD
PROCÉDÉ POUR FAIRE FONCTIONNER UN SÉCHOIR À ADSORPTION ET SÉCHOIR POUR METTRE EN OEUVRE LE PROCÉDÉ

(30) Priorität: 27.08.2009 DE 102009028931
(43) Veröffentlichungstag der Anmeldung: 04.07.2012
(73) Patentinhaber: BSH Hausgeräte GmbH, 81739 München (DE)
(72) Erfinder: KOHLRUSCH, Frank, 13189 Berlin (DE); MÜLLER, Ulf, 81929 München (DE); STOLZE, Andreas, 14612 Falkensee (DE)
(86) Internationale Anmeldenummer: PCT/EP2010/061887
(87) Internationale Veröffentlichungsnummer: WO 2011/023580

(56) Entgegenhaltungen:
- EP-A1- 0 777 998
- DE-A1- 3 626 887

## Beschreibung

Die Erfindung betrifft ein Verfahren zum Betreiben eines Adsorptions-Trockners, insbesondere eines Trockenschranks, und einen solchen Trockner mit einer Aufnahme für ruhend abgelegtes oder aufgehängtes Textilgut, einer Führung der Trockenluftströmung, einer Heizung, einem Adsorptionsapparat mit einem reversibel dehydrierbaren Adsorbens, mindestens einem Gebläse zur Erzeugung einer Luftströmung, die über die Heizung, das zu behandelnde Textilgut und durch den Adsorptionsapparat geleitet wird.

Ein Gerät, bei dem mit Feuchtigkeit angereicherte Luft durch Verwendung eines adsorptiven Trocknungsmittels (Adsorbens) die Feuchtigkeit entzogen wird, ist aus der Offenlegungsschrift DE 36 26 887 A1 bekannt. Das gemäß dieser Schrift als Wäschetrockner ausgebildete Gerät umfasst einen Aufnahmebehälter für das Trockengut, ein die Prozessluft im geschlossenen Kreislauf förderndes Gebläse, eine Heizvorrichtung zur Aufheizung der Prozessluft und einen Behälter zur Aufnahme eines mittels Adsorption und Desorption von Wasser arbeitendes Speichermedium. Als ein solches reversibel adsorbierendes Speichermedium wird in der Offenlegungsschrift ein Material auf Zeolith-Basis vorgeschlagen.

Der Trockner wird in der Weise betrieben, dass zu Beginn des Trocknungsprozesses die Prozessluft aufgeheizt wird, um eine geeignete Betriebstemperatur zu erreichen. Bei Wirksamwerden der adsorptiven Entfeuchtung durch den Adsorber und dem damit verbundenen Freisetzen der Adsorptionswärme wird die zugeführte Heizleistung erheblich reduziert.

Der Adsorber ist in einem Behälter derart angeordnet, dass über ihn wechselseitig der Entfeuchtungsluftstrom und der Luftstrom zur Desorption des Adsorbers geführt werden kann. Für den Luftstrom zur Desorption des Adsorbers sind ein zusätzliches Luftführungssystem und geeignete Luftführungssteuermittel, insbesondere Steuerklappen, sowie eine zusätzliche Heizung zur Erwärmung des desorbierenden Luftstromes vorhanden.

Bekannt ist auch ein Adsorptions-Trockner bei dem während des Trocknungsprozesses der im geschlossenen Kreislauf geleitete Trockenluftstrom abwechselnd in entgegen gesetzter Richtung geführt wird. Mit der wechselseitigen Durchströmung wird das Trockengut von der Prozessluft gleichmäßiger be- bzw. durchströmt, die Zeit bis zum Erreichen eines gewünschten Trocknungsergebnisses kann verkürzt werden.

Die Adsorptions-Trockner sind insoweit sehr effektiv zu betreiben, als die bei der Entfeuchtung des Trockengutes aufgewendete Wärmeenergie bei der Adsorption der Feuchtigkeit durch das Adsorbens freigesetzt und der Prozessluft wieder zugeführt werden kann. Das Adsorbens dient bei dem Trocknungsprozess sowohl der Entfeuchtung des Trockenguts als auch der Wärmerückgewinnung.

In der japanischen Offenlegungsschrift JP 09-135995 A ist ein Adsorptions-Trockner offenbart mit einer Aufnahme für Textilgut, einem ersten Gebläse in einem ersten Strömungskanal und einem zweiten Gebläse in einem zweiten Strömungskanal, einem Adsorptionsapparat mit reversibel dehydrierbarem Adsorbens und einer Heizung zu seiner Desorption. Der Adsorptions-Trockner führt einen Textilpflegeprozess der Betriebsart "Trocknen" aus, wobei zu dessen Beginn automatisch ein Entknitterungsprogramm zum Entfernen von Knittern vorgesehen wird. Dabei wird Umgebungsluft entlang des ersten Strömungskanals über das Adsorbens geleitet, bis dieses ausreichend mit Feuchtigkeit beladen ist. Durch Einschalten der Heizung wird das Adsorbens sodann desorbiert und die wieder austretende (desorbierte) Feuchtigkeit als Dampf zum Entfernen von Knittern in die Aufnahme und über das Textilgut geleitet. Zum anschließenden Trocknen des entknitterten Textilgutes wird Umgebungsluft über das Adsorbens und in die Aufnahme geleitet. Die sich hierbei im Adsorbens ansammelnde Feuchtigkeit lässt sich periodisch durch Einschalten der Heizung und Umlenken des Prozessluftstromes entfernen, wobei durch die Heizung erwärmte Umgebungsluft über das Adsorbens und durch einen gekühlten Wärmetauscher hindurch geführt wird, so dass der aus dem Adsorbens austretende Dampf am Wärmetauscher auskondensieren kann.

Den bekannten Adsorptions-Trocknern ist der Nachteil gemeinsam, dass nach einem Trockenvorgang zur Herstellung der weiteren Betriebsbereitschaft das Adsorbens desorbiert werden muss. Der dabei erzeugte Wasserdampf muss abgeführt werden, als Kondensat aus einem Sammelbehälter oder direkt an den das Gerät umgebenen Raum. Die beim Desorbieren aufzuwendende Energie ist vergleichsweise hoch, wodurch sich in nachteiliger Weise die Betriebskosten eines solchen Trockners erhöhen.

Der vorliegenden Erfindung liegt die Aufgabe zugrunde, den Adsorptions-Trockner so zu gestalten und zu betreiben, dass sein Einsatz insgesamt wirtschaftlicher ist. Die Umgestaltung des Trockners soll gemäß der Erfindung mit einem sehr geringen zusätzlichen Aufwand ermöglicht werden. Es ist zur technischen Realisierung der erfinderischen Aufgabe eine möglichst einfache Lösung vorzuschlagen.

Es ist weiterhin Aufgabe der Erfindung, dem Nutzer geeignete, vom internen Auswertesystem des Trockners erstellte Informationen betreffend den Betriebszustand des Trockners zur Anzeige zu bringen, die es ihm ermöglichen, durch eine günstige Organisation der Arbeitsgänge die Effektivität des Trocknereinsatzes positiv zu beeinflussen.

Erfindungsgemäß wird diese Aufgabe durch ein Verfahren zum Betreiben eines Adsorptions-Trockners mit den Merkmalen des Patentanspruches 1 und einem Trockner zur Realisierung des Verfahrens gemäß dem Patentanspruch 8 gelöst. Weitere Merkmale und vorteilhafte Ausbildungen der Erfindung sind in den jeweils nachfolgen Unteransprüchen enthalten.

Ein Vorteil der Erfindung liegt darin, dass die Nutzung des Adsorptions-Trockners gegenüber bekannten Trocknern wesentlich effizienter ist. Die Steigerung der Effizienz wird erreicht dadurch, dass die technische Ausgestaltung und die Steuerung des Trockners in der Weise ausgelegt sind, dass der Trockner zusätzlich als Auffrischer ("Refresher") nutzbar ist.

Erfindungswesentlich ist, dass für die Auffrischer-Funktion des Adsorptions-Trockners zumindest teilweise die zur Desorption des Adsorbens aufgewendete Energie genutzt wird. Die für das Desorbieren des Adsorbens ohnehin aufzuwendende Energie wird gemäß der Erfindung für einen zusätzlichen Wäschepflegeprozess genutzt. Durch die Anwendung der Erfindung wird in vorteilhafter Weise sowohl die Nutzungsvielfalt als auch die Effizienz beim Betreiben des Trockners erhöht.

Der technische Aufwand, der erforderlich ist, um den Trockner zusätzlich zum Auffrischen nutzen zu können, ist gering. Neben den für den Trocknerbetrieb schon vorhandenen Funktionsteilen und Baugruppen ist ein Schalter oder eine zusätzliche Schalterstellung des Betriebsschalters erforderlich, um vom Trocknerbetrieb in die Betriebsart "Auffrischen" umschalten zu können. Zur Vermeidung von Fehlbedienungen ist es vorteilhaft, die ausgewählte Betriebsart in geeigneter Form dem Nutzer gut sichtbar anzuzeigen. Weiterhin ist eine externe Wasserzuführung oder ein zusätzliches Wasserreservoir erforderlich, über die bzw. über das immer dann dem Arbeitsprozess Wasser zugeführt wird, wenn der für das Auffrischen erforderliche Feuchtegehalt des Prozessluftstromes durch das Desorbieren des Adsorbens nicht mehr erzeugbar ist.

Zusätzlich kann der Trockner einen für den Nutzer zugänglichen Speicher für wasserlösliche Zusatzstoffe wie z.B. Duftstoffe aufweisen. Der zusätzliche Speicher ist mit dem Wasserspeicher oder direkt mit dem Adsorber verbunden.

Um den Betrieb des Gerätes in Bezug auf dessen effektiven Einsatz selbst beeinflussen zu können, wird dem Nutzer in Ausgestaltung der Erfindung der aktuelle Beladungszustand des Adsorbens mit Wasser angezeigt. Der Nutzer kann auf Grundlage der bereitgestellten Information entscheiden, ob das Restaufnahmevermögen des Adsorbens für einen Trocknungsvorgang ausreichend ist oder ob ein Arbeitsgang zum Auffrischen von Textilgut sinnvoller ist. Die Information wird abgeleitet aus sensorisch erfassten Messdaten, aus denen die Menge des vom Adsorbens aufgenommenen Wassers bestimmbar ist.

Weitere Ausgestaltungen und Vorteile der Erfindung ergeben sich aus der nachfolgenden Beschreibung eines Ausführungsbeispiels. Das Ausführungsbeispiel wird nachstehend anhand der Zeichnungen näher erläutert. Dabei zeigen:
Figur 1: eine Seitenansicht eines Adsorptions-Trockners in Schnittdarstellung und
Figur 2: eine Frontansicht des Trockners

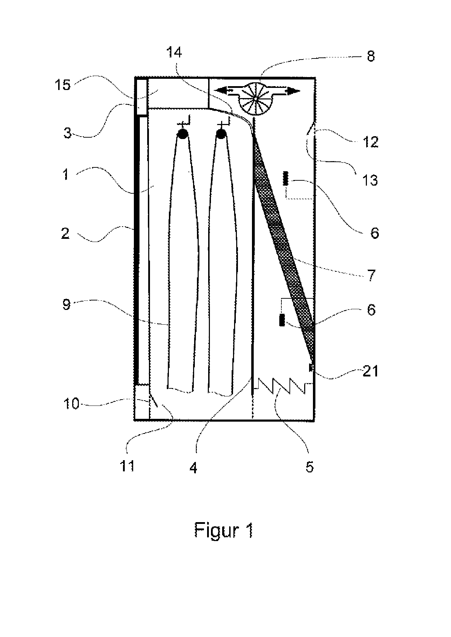

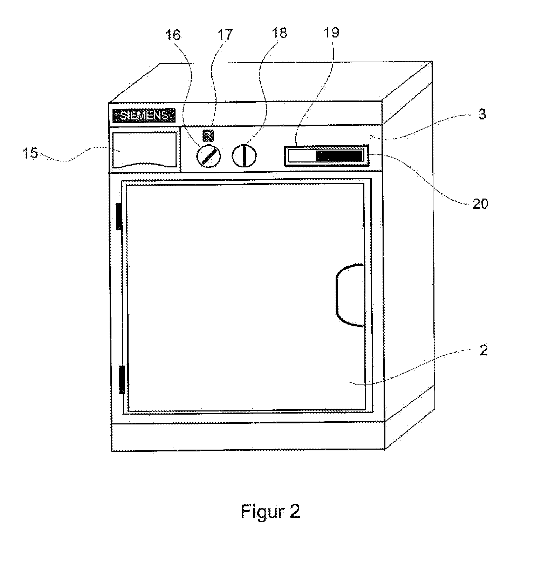

Die Figur 1 zeigt einen Adsorptions-Wäschetrockner in der Seitenansicht, Figur 2 in Frontansicht. Bei beiden Zeichnungen wurde von einer Darstellung der von der nachfolgenden Erläuterung nicht direkt betroffenen Details abgesehen.

In der Trockenkammer 1, die der Nutzer über die seitlich scharnierte Tür 2 beschicken kann, ist das zu behandelnde Textilgut 9 aufgehängt. Die Trockenkammer 1 und der Adsorptionsapparat 7 sind durch eine Zwischenwand 4 getrennt, die oben und unten Durchlässe für den Prozessluftstrom aufweist. Der Adsorptionsapparat 7 ist räumlich schräg angeordnet und senkrecht beweglich aufgehängt. Als Adsorber enthält die Adsorptionseinrichtung eine Zeolith-Packung, deren Masse auf das maximal zu trocknende Trockengut 9 ausgelegt ist. Mit der Adsorptionseinrichtung 7 in Wirkverbindung steht ein Drucksensor 21, dessen Ausgangssignale einem intelligenten Auswertesystem zur Bestimmung des Beladungszustandes des Zeolithen zugeführt werden.

Unterhalb der Adsorptionseinrichtung 7 - nachfolgend auch kurz Adsorber genannt - ist die Heizung 5 angeordnet. Mittels dieser Heizung 5 wird die Prozessluft auf die für den Prozess erforderliche Betriebstemperatur aufgeheizt. Von der Temperatur und der Strömungsgeschwindigkeit der im Kreislauf geführten Prozessluft werden der Prozess des Desorbierens und damit der Feuchtegehalt des Prozessluftstromes wesentlich bestimmt.

Zur Erzeugung der Luftströmung ist ein Querstromgebläse 8 vorgesehen mit geraden Schaufeln und einem symmetrischen Gehäuse. Mit einem derartigen Querstromgebläse 8 können durch Drehrichtungsumkehr des Lüfterrads gleich starke Luftströmungen in entgegengesetzt gerichteten Richtungen erzeugt werden.

Über eine Luftzuführungsöffnung 10 im unteren Bereich des Trockners kann Frischluft von außen angesaugt werden, über eine Abluftöffnung 12 im oberen Bereich des Trockners kann erwärmte und mit Feuchtigkeit beladene Luft nach außen abgeführt werden. Beide Luftöffnungen 10, 12 sind mittels steuerbarer Klappen 11, 13 verschließbar. Mit Hilfe der steuerbaren Klappen 11, 13 ist es möglich, die Prozessparameter des Prozessluftstromes, Temperatur und Feuchtegehalt, in kurzer Zeit stark abzusenken.

Zur Überwachung und Steuerung des Textilpflegeprozesses sind symmetrisch zum Adsorber 7 zwei Temperatursensoren 6 angeordnet, deren Ausgangssignale einem nicht dargestellten intelligenten Auswertesystem zugeführt werden.

Für den Nutzer gut zugänglich ist neben dem Bedienfeld 3 ein externer Wasserspeicher 15 angeordnet. Der Wasserspeicher 15 ist als Einschub ausgebildet. Über eine Wasserführungsleitung 14 mit einem steuerbaren Ventil ist der Wasserspeicher mit dem Adsorber 7 verbunden.

Die Inbetriebnahme des Trockners erfolgt mittels des Drehschalters 16. Mit dem gleichen Schalter 16 wird die Betriebsart "Trocknen" bzw. "Auffrischen" ausgewählt. Die ausgewählte Betriebsart wird dem Nutzer angezeigt. Im Bedienfeld 3 über dem Schalter 16 leuchtet in einem Funktionsfeld 17 entsprechend der Auswahl ein "T" bzw. ein "A" auf. Mit einer solchen gut erkennbaren Anzeige 17 können Fehlbedienungen vermieden werden.

Die Anpassung der Betriebsparameter an das zu behandelnde Textilgut 9 erfolgt durch den gleichen Auswahlschalter 18 wie beim Trocknen. Mit dieser Einstellungsvorwahl bestimmt der Nutzer den Temperaturbereich für den Wäschepflegeprozess, sowie den Feuchtegehalt des Prozessluftstromes.

Im Bedienfeld 3 ist zusätzlich eine für den Nutzer gut sichtbare Anzeige 19 vorhanden, die dem Nutzer eine Information liefert über den Beladungszustand des Zeolithen. Im Ausführungsbeispiel ist in der Anzeige 19 ein Leuchtbalken 20 erkennbar. Mit zunehmender Beladung des Zeolithen mit Wasser verlängert sich der Balken 20 von rechts nach links.

Beim Auffrischen wird die Prozessluft von der Heizvorrichtung 5 auf eine vorbestimmte, vom Nutzer durch die Einstellung des Auswahlschalters18 auf eine bestimmte Materialart festgelegte, Temperatur erwärmt und mittels des Gebläses 8 durch den Adsorber 7 geleitet. Feuchtigkeit aus dem Adsorber 7 wird an den Luftstrom abgegeben. Damit verbunden ist eine Absenkung der Temperatur des im Kreislauf beförderten Prozessluftstromes. Die mit Feuchtigkeit angereicherte abgekühlte Prozessluft gelangt zum Textilgut 9, von dem die Feuchtigkeit zum Teil aufgenommen wird. Bei diesem Vorgang wird Adsorptionswärme wieder freigesetzt, die vom Prozessluftstrom aufgenommen, diesen erneut aufheizt. Die aufgeheizte Prozessluft wird dann wieder zum Adsorber 7 befördert.

Über den Drucksensor 21 wird die vom Absorber (Zeolithe) 7 aufgenommene Wassermenge detektiert. Die Messdaten werden geräteintern ausgewertet und zur Anzeige gebracht. Im Beispiel ist dazu die Balkenanzeige 20 vorgesehen. Die Balkenanzeige 20 liefert dem Nutzer die Information bis zu welchem Grad der Adsorber mit Flüssigkeit gesättigt ist. Bei dem in Figur 2 beispielhaft dargestellten Betriebszustand ist das maximal mögliche Flüssigkeits-Aufnahmevermögen des Zeoliths zu 60% erschöpft.

Die Balkenanzeige 20 ist eine von vielen Varianten den Beladungsgrad des Zeolithen für den Nutzer erkennbar zu machen. Möglich wäre beispielsweise auch, über ein Display eine Empfehlung zum Betreiben des Trockners in Textform auszugeben.

Die Balkenanzeige in Figur 2 zeigt einen Betriebszustand an, bei dem der Zeolith bezogen auf die maximale Kapazität nur noch 40% an Feuchtigkeit aufnehmen kann. Bei einem solchen Betriebszustand ist es nicht optimal einen Trocknungsvorgang mit einer hohen Beladungsmenge zu starten. Der Trocknungsprozess würde sich in einem solchen Falle zeitlich verlängern, weil während des Trocknungsprozesses der Zeolith in einem oder mehreren Zwischenschritten zumindest teilweise desorbiert werden muss. Sinnvoller ist es, weil insgesamt energiesparender, bei einem hohen Beladungsgrad des Zeolithen den Trockner zum Auffrischen zu nutzen.

Es liegt im Ermessen des Nutzers den Trockner entsprechend der ihm angezeigten Information zu betreiben. Die Anzeige 19, die den Beladungsgrad des Zeolithen mit Wasser anzeigt, liefert dem Nutzer die erforderliche Information, den Betrieb des Trockners effektiv zu gestalten.

Durch die vom Zeolith abgegebene Feuchtigkeitsmenge verringert sich die Temperatur der Prozessluft. Mittels der Sensoren 6 wird die Temperatur des Prozessluftstromes auf beiden Seiten des Adsorbers 7 erfasst. Die Temperaturdifferenz ist ein Maß für die bei der Desorption des Zeoliths abgegebenen Feuchtigkeitsmenge. Sinkt die Temperaturdifferenz stark ab, ist die Desorption des Zeoliths weitestgehend abgeschlossen. Ist in diesem Betriebszustand das Auffrischen noch nicht abgeschlossen, wird dem Adsorber aus dem Wasserbehälter 15 zusätzlich Wasser zugeführt werden.

Bei einer diskontinuierlichen Betriebsweise des Pflegeprozesses werden während des Auffrischens die Temperatur der Prozessluft und damit deren Feuchtegehalt kurzzeitig erhöht. Das anschließende starke Absenken der Temperatur des Prozessluftstromes und dessen Feuchtegehalt wird über die Abluft- und / oder die Zuluftleitung 10, 12 gesteuert, die mittels der beiden steuerbaren Klappen 11, 13 geöffnet werden können. Bei dieser Betriebsweise des Prozesses wird neben der kurzzeitig erfolgten starken Regulierung der Betriebsparameter zugleich die Desorption des Zeolithen beschleunigt.

### Bezugszeichenliste

- 1.: Trockenkammer
- 2.: Tür
- 3.: Bedienblende
- 4.: Trennwand
- 5.: Heizung
- 6.: Sensoren
- 7.: Adsorber
- 8.: Gebläse
- 9.: Textilgut
- 10.: Zuluftöffnung
- 11.: Zuluftklappe
- 12.: Abluftöffnung
- 13.: Abluftklappe
- 14.: Flüssigkeitsleitung
- 15.: Wasserbehälter
- 16.: Drehschalter
- 17.: Funktionsanzeige
- 18.: Auswahlschalter
- 19.: Beladungsanzeige
- 20.: Leuchtbalken
- 21.: Drucksensor

## Patentansprüche

1. Verfahren zum Betreiben eines Adsorptions-Trockners, mit einer Aufnahme (1) für ruhend abgelegtes oder aufgehängtes Textilgut, einem System zur Führung von Prozessluft, wenigstens einem Gebläse (8) zur Erzeugung einer Luftströmung, einem Adsorptionsapparat (7) mit reversibel dehydrierbarem Adsorbens und einer Heizung (5) zur Desorption des Adsorbens, wobei während eines Textilpflegeprozesses der Betriebsart "Trocknen" zumindest zeitweise ein von dem Gebläse (8) angetriebener Prozessluftstrom wenigstens durch den Adsorptionsapparat (7) und über das zu pflegende Textilgut geleitet wird, wobei das Adsorbens mit Feuchtigkeit beladen wird, wobei der Beladungszustand des Adsorbens mit Wasser detektiert wird und wenigstens nach dem Ende des Textilpflegeprozesses "Trocknen" angezeigt wird, und während eines nachfolgenden, ausgewählten und gestarteten Textilpflegeprozesses der Betriebsart "Auffrischen" zumindest teilweise desorbiert wird, wobei die desorbierte Feuchtigkeit zur Auffrischung von Textilgut als feuchter Prozessluftstrom in die Aufnahme (1) geleitet wird.

2. Verfahren nach wenigstens einem der vorangehenden Ansprüche,
wobei Temperatur, Feuchtigkeitsgehalt und/oder Strömungsgeschwindigkeit des Prozessluftstromes während wenigstens einem der beiden Textilpflegeprozesse gesteuert und/oder geregelt wird.

3. Verfahren nach wenigstens einem der vorangehenden Ansprüche,
wobei die Prozessparameter Temperatur und Feuchtigkeitsgehalt des Prozessluftstromes über eine Abluftöffnung (12) und eine Zuluftöffnung (10) gesteuert werden.

4. Verfahren nach wenigstens einem der vorangehenden Ansprüche,
wobei wenigstens einer der beiden Textilpflegeprozesse in Abhängigkeit zu einer Einstellungsvorwahl bezüglich der Art des Textilgutes gesteuert und/oder geregelt wird.

5. Verfahren nach wenigstens einem der vorangehenden Ansprüche,
wobei die den Textilpflegeprozesses der Betriebsart "Auffrischen" entscheidenden Prozessparameter, insbesondere die Temperatur und der Feuchtigkeitsgehalt des Prozessluftstromes, über geeignete Sensoren (6) messtechnisch erfasst werden und die erfassten Messdaten einem intelligenten Auswertesystem zur internen Auswertung zugeführt werden.

6. Verfahren nach wenigstens einem der vorangehenden Ansprüche,
wobei während des Textilpflegeprozesses der Betriebsart "Auffrischen" dem Adsorbens im Adsorptionsapparat (7) Wasser zugeführt wird, wenn der Sättigungsgrad des Adsorbens für die erforderliche Befeuchtung des Prozessluftstromes nicht ausreicht.

7. Verfahren nach wenigstens einem der vorangehenden Ansprüche,
wobei während des Textilpflegeprozesses der Betriebsart "Auffrischen" dem Prozessluftstrom ein wasserlöslicher Zusatzstoff, insbesondere ein Duftstoff, zugeführt wird.

8. Adsorptions-Trockner zur Realisierung des Verfahrens nach Anspruch 1, mit einer Aufnahme (1) für Textilgut, wenigstens einem Gebläse (8), einem Adsorptionsapparat (7) mit reversibel dehydrierbarem Adsorbens und einer Heizung (5) zur Desorption, wobei aus dem Adsorbens desorbierte Feuchtigkeit zur Auffrischung des Textilgutes in die Aufnahme (1) leitbar ist, wobei der Trockner wenigstens einen Sensor (21, 6) zum Detektieren des Beladungszustandes des Adsorbens mit Wasser, eine den Beladungszustand des Adsorbens mit Wasser anzeigende Anzeige (19) und einen Wahlschalter (16) umfasst , der ein Anwählen und Starten wenigstens eines Textilpflegeprozesses der Betriebsart "Trocknen" und ein Anwählen und Starten eines Textilpflegeprozesses der Betriebsart "Auffrischen" ermöglicht, wobei nach Ende des Textilpflegeprozesses der Betriebsart "Trocknen" die Heizung (5) zum Desorbieren des Adsorbens während eines nachfolgend auswählbaren Textilpflegeprozesses der Betriebsart "Auffrischen" in Betrieb setzbar ist.

9. Adsorptions-Trockner nach Anspruch 8,
wobei ein Bedienfeld (3) eine die Betriebsart des ausgewählten Textilpflegeprozesses anzeigende Anzeige (17) umfasst.

10. Adsorptions-Trockner nach Anspruch 8 oder 9,
wobei der Adsorptions-Trockner wenigstens einen Wasserspeicher (15) und/oder einen Anschluss an ein externes Wassernetz umfasst, wobei der Wasserspeicher (15) und/oder der externe Wasseranschluss über eine Wasserführungsleitung (14) mit dem Adsorptionsapparat (7) oder direkt mit dem Adsorbens verbunden ist.

11. Adsorptions-Trockner nach Anspruch 10,
wobei in der Wasserführungsleitung (14) ein steuerbares Ventil angeordnet ist.

12. Adsorptions-Trockner nach Anspruch 10 oder 11,
wobei der Wasserspeicher (15) als Einschub ausgebildet und im Bereich des Bedienfelds (3) angeordnet ist.

13. Adsorptions-Trockner nach wenigstens einem der Ansprüche 8 bis 12,
wobei der Adsorptions-Trockner einen zusätzlichen Speicher für wasserlösliche Zusatzstoffe, insbesondere Duftstoffe, umfasst, wobei der zusätzliche Speicher zur Abgabe der Zusatzstoffe über eine Verbindung mit dem Wasserspeicher (15) oder direkt mit dem Adsorptionsapparat (7) verbunden ist.

14. Adsorptions-Trockner nach wenigstens einem der Ansprüche 8 bis 13,
wobei der Sensor zum Detektieren des Beladungszustandes des Adsorbens ein Drucksensor (21) ist.

15. Adsorptions-Trockner nach wenigstens einem der Ansprüche 8 bis 14
wobei der Trockner wenigstens eine Abluftöffnung (12) und eine Zuluftöffnung (10) umfasst, die jeweils mittels einer steuerbaren Klappe (11, 13) verschließbar sind.

## Claims

1. Method for operating an adsorption dryer, this comprising a receptacle (1) for textile goods which are stored or hung in a stationary manner, a system for guiding process air, at least one blower (8) for generating an air flow, an adsorption apparatus (7) featuring a reversibly dehydratable adsorbent, and a heater (5) for desorption of the adsorbent, wherein during a textile care process in the "dry" operating mode, a process air flow that is driven by the blower (8) is routed at least at times through the adsorption apparatus (7) and over the textile goods in care, wherein the adsorbent becomes charged with moisture, wherein the charge state of the adsorbent (in terms of water content) is detected and "dry" is displayed at least after the end of the textile care process, and at least partial desorption occurs during a subsequent selected and started textile care process in the "refresh" operating mode, wherein the desorbed moisture is routed into the receptacle (1) as a moist process air flow for the purpose of refreshing textile goods.

2. Method according to at least one of the preceding claims, wherein temperature, moisture content and/or flow speed of the process air flow are controlled and/or adjusted during at least one of the two textile care processes.

3. Method according to at least one of the preceding claims, wherein the process parameters of temperature and moisture content in relation to the process air flow are controlled by means of an outgoing air opening (12) and an incoming air opening (10).

4. Method according to at least one of the preceding claims, wherein at least one of the two textile care processes is controlled and/or adjusted according to a pre-selection of settings relating to the type of the textile goods.

5. Method according to at least one of the preceding claims, wherein the process parameters that are critical to the textile care process in the "refresh" operating mode, in particular the temperature and the moisture content of the process air flow, are metrologically captured by means of suitable sensors (6) and the captured measurement data is supplied to an intelligent analysis system for internal analysis.

6. Method according to at least one of the preceding claims, wherein water is supplied to the adsorbent in the adsorption apparatus (7) if the saturation level of the adsorbent is insufficient for the required humidification of the process air flow during the textile care process in the "refresh" operating mode.

7. Method according to at least one of the preceding claims, wherein a water-soluble additive, in particular a softened, is supplied to the process air flow during the textile care process in the "refresh" operating mode.

8. Adsorption dryer for realising the method according to claim 1, comprising a receptacle (1) for textile goods, at least one blower (8), an adsorption apparatus (7) featuring a reversibly dehydratable adsorbent, and a heater (5) for desorption, wherein moisture that has been desorbed from the adsorbent can be routed into the receptacle (1) for the purpose of refreshing the textile goods, wherein the dryer comprises at least one sensor (21, 6) for detecting the charge state of the adsorbent in terms of water content, a display (19) for indicating the charge state of the adsorbent in terms of water content, and a selection switch (16) which allows selection and starting of at least one textile care process in the "dry" operating mode and selection and starting of a textile care process in the "refresh" operating mode, wherein after completion of the textile care process in the "dry" operating mode, the heater (5) for desorbing the adsorbent can be activated during a subsequently selectable textile care process in the "refresh" operating mode.

9. Adsorption dryer according to claim 8, wherein an operating panel (3) comprises a display (17) which indicates the operating mode of the selected textile care process.

10. Adsorption dryer according to claim 8 or 9, wherein the adsorption dryer comprises at least one water store (15) and/or an interface to an external water supply network, wherein the water store (15) and/or the external water interface is connected via a water transport line (14) to the adsorption apparatus (7) or directly to the adsorbent.

11. Adsorption dryer according to claim 10, wherein a control valve is arranged in the water transport line (14).

12. Adsorption dryer according to claim 10 or 11, wherein the water store (15) is designed as a drawer and is arranged in the region of the operating panel (3).

13. Adsorption dryer according to at least one of claims 8 to 12, wherein the adsorption dryer comprises an additional store for water-soluble additives, in particular softeners, wherein the additional store has a connection to the water store (15) or is directly connected to the adsorption apparatus (7) for the purpose of releasing the additives.

14. Adsorption dryer according to at least one of claims 8 to 13, wherein the sensor for detecting the charge state of the adsorbent is a pressure sensor (21).

15. Adsorption dryer according to at least one of claims 8 to 14, wherein the dryer comprises at least one outgoing air opening (12) and one incoming air opening (10), each of which can be closed by means of a controllable gate (11, 13).

## Revendications

1. Procédé pour faire fonctionner un séchoir à adsorption, avec un logement (1) pour un article allongé au repos ou accroché, un système pour guider de l'air de procédé, au moins un ventilateur (8) pour produire un courant d'air, un appareil d'adsorption (7) avec un adsorbant pouvant être déshydraté de manière réversible et un chauffage (5) pour une désorption de l'adsorbant, dans lequel; au moins temporairement pendant un procédé d'entretien de textile de type « séchage », un courant d'air de procédé entraîné par le ventilateur (8) est dirigé au moins à travers l'appareil d'adsorption (7) et sur l'article textile à entretenir, dans lequel l'adsorbant se charge d'humidité, dans lequel l'état de chargement de l'adsorbant en eau est détecté et est indiqué au moins après la fin du procédé d'entretien de textile de type « séchage », et est au moins partiellement désorbé pendant un procédé d'entretien de textile de type « avivage » ultérieur, sélectionné et commencé, dans lequel l'humidité désorbée est dirigée dans le logement (1) en tant que courant d'air de procédé humide en vue de l'avivage de l'article textile.

2. Procédé selon la revendication précédente,
dans lequel la température, la teneur en humidité et/ou la vitesse d'écoulement du courant d'air de procédé est commandée et/ou régulée pendant au moins un des deux procédés d'entretien de textile.

3. Procédé selon l'une quelconque des revendications précédentes,
dans lequel les paramètres de procédé température et teneur en humidité du courant d'air de procédé sont commandés par l'intermédiaire d'une ouverture d'échappement d'air (12) et d'une ouverture d'arrivée d'air (10).

4. Procédé selon l'une quelconque des revendications précédentes,
dans lequel au moins un des deux procédés d'entretien de textile est commandé et/ou régulé en fonction d'une présélection de réglage dépendante du type d'article textile.

5. Procédé selon l'une quelconque des revendications précédentes,
dans lequel les paramètres de procédé déterminant le procédé d'entretien de textile de type « avivage », en particulier la température et la teneur en humidité du courant d'air de procédé, sont déterminés grâce à une technique de mesure par l'intermédiaire de capteurs (6) appropriés et les données de mesure déterminées sont fournies à un système d'interprétation intelligent en vue d'une interprétation interne.

6. Procédé selon l'une quelconque des revendications précédentes,
dans lequel, pendant le procédé d'entretien de textile de type « avivage », de l'eau est fournie à l'adsorbant dans l'appareil d'adsorption (7) lorsque le degré de saturation de l'adsorbant ne suffit pas pour l'humidification requise du courant d'air de procédé.

7. Procédé selon l'une quelconque des revendications précédentes,
dans lequel, pendant le procédé d'entretien de textile de type « avivage », un additif hydrosoluble, en particulier une substance odorante, est ajouté au courant d'air de procédé.

8. Séchoir à adsorption pour mettre en oeuvre le procédé selon la revendication 1,
avec un logement (1) pour un article textile, au moins un ventilateur (8), un appareil d'adsorption (7) avec un adsorbant pouvant être déshydraté de manière réversible et un chauffage (5) pour une désorption, dans lequel l'humidité désorbée à partir de l'adsorbant peut être dirigée dans le logement (1) en vue d'un avivage de l'article textile, dans lequel le séchoir comprend au moins un capteur (21, 6) pour une détection de l'état de chargement en eau de l'adsorbant, un affichage (19) indiquant l'état de chargement en eau de l'adsorbant et un commutateur-sélecteur (16) qui permet une sélection et un démarrage d'au moins un procédé d'entretien de textile de type « séchage » et une sélection et un démarrage d'un procédé d'entretien de textile de type « avivage », dans lequel le chauffage (5) pour une désorption de l'adsorbant peut être mis en marche après la fin du procédé d'entretien de textile de type « séchage » pendant un procédé d'entretien de textile de type « avivage » pouvant être sélectionné ultérieurement.

9. Séchoir à adsorption selon la revendication 8,
dans lequel un panneau de commande (3) comprend un affichage (17) indiquant le type de fonctionnement du procédé d'entretien de textile sélectionné.

10. Séchoir à adsorption selon la revendication 8 ou 9,
dans lequel le séchoir à adsorption comprend au moins un réservoir d'eau (15) et/ou un raccordement à un réseau d'eau externe, dans lequel le réservoir d'eau (15) et/ou le raccordement d'eau externe est/sont relié(s) à l'appareil d'adsorption (7) par l'intermédiaire d'une conduite d'arrivée d'eau (14) ou est/sont relié(s) directement à l'adsorbant.

11. Séchoir à adsorption selon la revendication 10,
dans lequel un robinet pouvant être commandé est agencé dans la conduite d'arrivée d'eau (14).

12. Séchoir à adsorption selon la revendication 10 ou 11,
dans lequel le réservoir d'eau (15) est réalisé sous la forme d'un tiroir et est agencé dans le secteur du panneau de commande (3).

13. Séchoir à adsorption selon l'une quelconque des revendications 8 à 12,
dans lequel le séchoir à adsorption comprend un réservoir supplémentaire pour des additifs hydrosolubles, en particulier des substances odorantes, dans lequel le réservoir supplémentaire pour distribuer les additifs est relié au réservoir d'eau (15) par l'intermédiaire d'une liaison ou est relié directement à l'appareil d'adsorption (7).

14. Séchoir à adsorption selon l'une quelconque des revendications 8 à 13,
dans lequel le capteur pour la détection de l'état de chargement de l'adsorbant est un capteur de pression (21).

15. Séchoir à adsorption selon l'une quelconque des revendications 8 à 14,
dans lequel le séchoir comprend au moins une ouverture d'échappement d'air (12) et une ouverture d'arrivée d'air (10) qui peuvent respectivement être fermées au moyen d'un lapet (11, 13) pouvant être commandé.
